(19) Europäisches Patentamt / European Patent Office / Office européen des brevets

(11) **EP 2 963 724 A1**

(12) **EUROPEAN PATENT APPLICATION**
published in accordance with Art. 153(4) EPC

(43) Date of publication:
**06.01.2016 Bulletin 2016/01**

(21) Application number: **14757123.6**

(22) Date of filing: **30.01.2014**

(51) Int Cl.:
*H01M 8/24* (2006.01)    *H01M 8/10* (2006.01)

(86) International application number:
**PCT/JP2014/000492**

(87) International publication number:
**WO 2014/132562 (04.09.2014 Gazette 2014/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.02.2013 JP 2013035296**

(71) Applicant: **TOYOTA JIDOSHA KABUSHIKI KAISHA**
**Toyota-shi, Aichi-ken, 471-8571 (JP)**

(72) Inventors:
• **TAKEUCHI, Hiroaki**
  **Toyota-shi**
  **Aichi 471-8571 (JP)**
• **NONOYAMA, Nobuaki**
  **Toyota-shi**
  **Aichi 471-8571 (JP)**

(74) Representative: **Intès, Didier Gérard André et al**
**Cabinet Beau de Loménie**
**158, rue de l'Université**
**75340 Paris Cedex 07 (FR)**

(54) **FUEL CELL DEVICE AND MANUFACTURING METHOD FOR SAME**

(57)    A fuel cell apparatus comprises a fuel cell that has a stacked structure of a plurality of fuel cell units; an outer cover that is provided to cover at least part of a side face of the fuel cell along a stacking direction of the fuel cell; and an intermediate layer that is placed between the outer cover and the side face covered by the outer cover, wherein the outer cover and the intermediate layer are configured to satisfy X0> Fg/(K1+K2), where K1 represents a spring constant of the intermediate layer, K2 represents a spring constant of the outer cover, Fg represents an inertial force applied to the fuel cell and X0 represents an allowable amount of misalignment of the fuel cell unit in the fuel cell. This configuration of the fuel cell apparatus suppresses positional misalignment of the fuel cell.

Fig.2

EP 2 963 724 A1

**Description**

Cross Reference to Related Application

The present application claims priority from Japanese patent application P2013-35296 filed on February 26, 2013, the entirety of disclosure of which is hereby incorporated by reference into this application.

Technical Field

The present invention relates to a fuel cell apparatus.

Background Art

In a proposed configuration of a fuel cell apparatus (Patent Literature 1), an elastic material such as silicone or urethane rubber is packed between a fuel cell (fuel cell stack) and a tension plate that is extended along a stacking direction of fuel cell units constituting the fuel cell, in order to improve the vibration resistance and the impact resistance of the fuel cell stack.

Citation List

Patent Literature

[PTL 1] JP 2003-203670A

Summary

Technical Problem

In the fuel cell apparatus described in Patent Literature 1, however, the elastic material has low rigidity and is thus easily deformable when an inertial force is applied to the fuel cell by, for example, an external impact to press the fuel cell against the elastic material. This is likely to cause positional misalignment of the fuel cell units constituting the fuel cell, while protecting the fuel cell units from being damaged. The positional misalignment of the fuel cell units may cause breakage of sealing between adjacent fuel cell units and may lead to leakage of a reactive gas or a cooling medium.
This problem is not limited to the configuration that the elastic material is packed between the tension plate and the fuel cell but is commonly found in any configuration that an elastic material is packed between a fuel cell and an outer cover that is provided to cover the fuel cell, for example, a configuration that an elastic material is packed between a fuel cell and a case for containing the fuel cell. With regard to the prior art fuel cell apparatus, other needs include, for example, improvement of the production efficiency of the fuel cell apparatus, cost reduction, resource saving and easy manufacture.

Solution to Problem

In order to solve at least part of the problems described above, the invention may be implemented by the following aspects.

(1) According to one aspect of the invention, there is provided a fuel cell apparatus. This fuel cell apparatus comprises a fuel cell that has a stacked structure of a plurality of fuel cell units; an outer cover that is provided to cover at least part of a side face of the fuel cell along a stacking direction of the fuel cell; and an intermediate layer that is placed between the outer cover and the side face covered by the outer cover, wherein the outer cover and the intermediate layer are configured to satisfy $X0 > Fg/(K1+K2)$, where K1 represents a spring constant of the intermediate layer, K2 represents a spring constant of the outer cover, Fg represents an inertial force applied to the fuel cell and X0 represents an allowable amount of misalignment of the fuel cell unit in the fuel cell. In the fuel cell apparatus of this aspect, the intermediate layer and the outer cover are configured to satisfy $X0 > Fg/(K1+K2)$. When the inertial force Fg is applied to the fuel cell, deformation of the intermediate layer and the outer cover is equal to or smaller than the allowable amount of misalignment X0. Accordingly, even when deformation of the intermediate layer and the outer cover causes positional misalignment of the fuel cell units constituting the fuel cell, this configuration causes the positional misalignment to be equal to or less than the allowable amount of misalignment X0 and thereby suppresses leakage of a reactive gas or a cooling medium.

(2) In the fuel cell apparatus of the above aspect, the intermediate layer is configured to satisfy K1= α*E*(1/D) and D>D0, where E represents a Young's modulus of the intermediate layer, D represents a thickness of the intermediate layer, D0 represents a minimum required clearance between the outer cover and the side face covered by the outer cover, and α represents a constant of proportionality. In the fuel cell apparatus of this aspect, the thickness D of the intermediate layer may be increased by increasing the Young's modulus E of the intermediate layer while the spring constant K1 of the intermediate layer is kept unchanged. This ensures a large clearance between the outer cover and the fuel cell in the case that the fuel cell is covered by the outer cover. This enables the fuel cell to be reliably covered by the outer cover even in the case of a large positional misalignment (tolerance) between fuel cell units constituting the fuel cell in the initial state.

(3) In the fuel cell apparatus of the above aspect, the intermediate layer is comprised of a plurality of particles. In the fuel cell apparatus of this aspect, after the fuel cell is covered by the outer cover, the particles are supplied between the fuel cell and the outer cover, so as to form the intermediate layer.

(4) In the fuel cell apparatus of the above aspect, a force of constraint by the intermediate layer with regard to a fuel cell unit located at an end out of the plurality of fuel cell units is smaller than an allowable load along the stacking direction with regard to the fuel cell unit. A force that is likely to cause a dimensional change along the stacking direction may be applied to the fuel cell by, for example, aged deterioration. A fuel cell unit located at an end has one side that is not in contact with any other fuel cell unit. Compared with the other fuel cell units, the fuel cell unit located at the end has a relatively large force of constraint by the intermediate layer against the force that is likely to cause the dimensional change. In the fuel cell apparatus of this aspect, however, the force of constraint applied by the intermediate layer to the fuel cell unit located at the end is smaller than the allowable load. This configuration suppresses leakage of the reactive gas or the cooling medium from between the fuel cell unit located at the end an adjacent fuel cell unit.

(5) In the fuel cell apparatus of the above aspect, the particles have a spherical appearance shape, and the particles have a mean diameter that is equal to or less than 1/2 of a minimum required clearance between the outer cover and the side face covered by the outer cover. In the fuel cell apparatus of this aspect, the particles are densely packed between the outer cover and the side face covered by the outer cover. This allows for an increase in spring constant of the intermediate layer and thereby a decrease in spring constant of the outer cover. The outer cover can thus be made of a lightweight material of low rigidity.

(6) In the fuel cell apparatus of the above aspect, the outer cover is configured to cover all side faces of the fuel cell along the stacking direction of the fuel cell and includes a supplier structure that is configured to supply the particles and is placed on a surface of the outer cover which covers a top face of the fuel cell in a vertical direction in a state that the fuel cell is mounted, and the supplier structure includes a container portion and the particles contained in the container portion and supplies the particles between the outer cover and the fuel cell by utilizing weight of the particles. In the fuel cell apparatus of this aspect, when a gap is produced between the outer cover and the fuel cell with an increase in packing density of the particles between the outer cover and the fuel cell during the use of the fuel cell apparatus, the particles contained in the container portion are automatically supplied into the gap by utilizing their own weight. This accordingly reduces the presence of such gaps.

(7) In the fuel cell apparatus of the above aspect, the intermediate layer is comprised of flexible bag bodies, in each of which a number of particles are sealed. In the fuel cell apparatus of this aspect, the particles are sealed in the bag bodies. This suppresses scattering of the particles during manufacture of the fuel cell apparatus and facilitates handling of the particles.

(8) In the fuel cell apparatus of the above aspect, the particles include at least one of sand, resin beads and glass beads. The fuel cell apparatus of this aspect uses sand or glass beads as the particles and thus allows for formation of the intermediate layer at a relatively low cost. Employing resin beads for the particles reduces the weight of the intermediate layer.

(9) In the fuel cell apparatus of the above aspect, the fuel cell receives supplies of a reactive gas and a cooling medium, and the allowable amount of misalignment is an amount of positional misalignment of the fuel cell unit in a direction perpendicular to the stacking direction and is an upper limit amount of misalignment that does not cause leakage of the reactive gas or the cooling medium in the fuel cell.

The invention may be implemented by any of various other aspects, for example, a manufacturing method of the fuel cell apparatus, a fuel cell system and a vehicle with the fuel cell apparatus mounted thereon.

Brief Description of Drawings

Fig. 1 is a perspective view illustrating the schematic configuration of a fuel cell apparatus according to a first embodiment of the invention;

Fig. 2 is a sectional view illustrating the fuel cell apparatus of the first embodiment;

Fig. 3 is a diagram illustrating the inertial force applied to a fuel cell 200 in the case that the fuel cell apparatus 100 is mounted on a vehicle;

Fig. 4 is a diagram schematically illustrating a method of determining a variable D0;

Fig. 5 is a flowchart showing a procedure of manufacturing method of the fuel cell apparatus 100 according to the first embodiment;

Fig. 6 is a diagram schematically illustrating the process of step S110;

Fig. 7 is a diagram schematically illustrating a fuel cell case 300 and the fuel cell 200 after aged deterioration; and

Fig. 8 is a sectional view illustrating a fuel cell apparatus according to a second embodiment.

Description of Embodiments

A. Embodiment

A1. Configuration of Apparatus

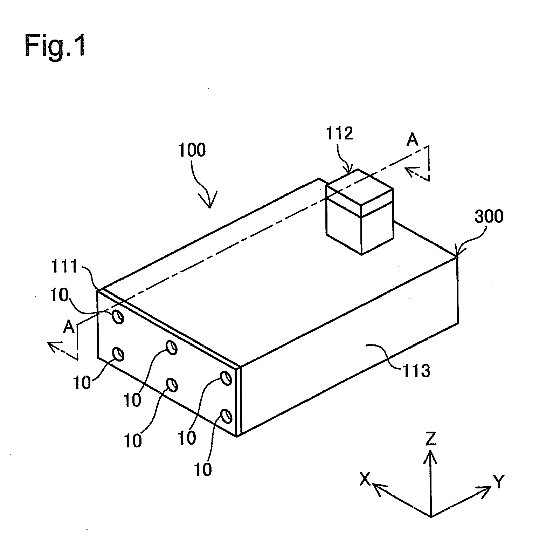

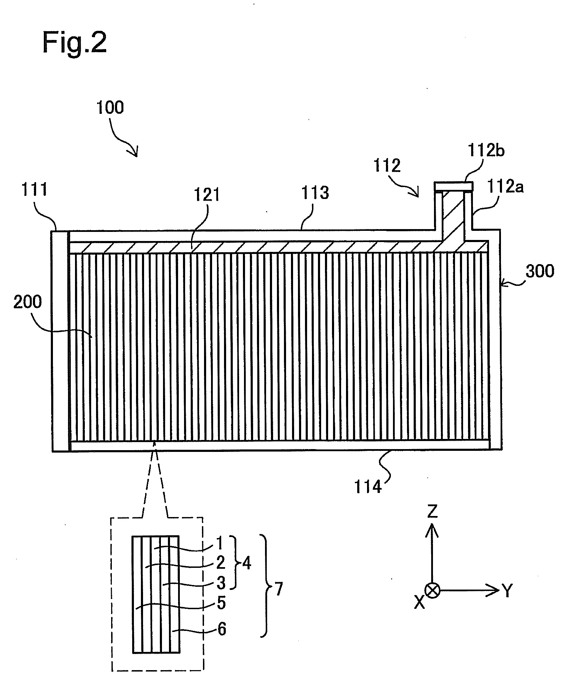

Fig. 1 is a perspective view illustrating the schematic configuration of a fuel cell apparatus according to a first embodiment of the invention. Fig. 2 is a sectional view illustrating the fuel cell apparatus of the first embodiment. Fig. 2 illustrates an A-A section of Fig. 1. A fuel cell apparatus 100 includes a fuel cell 200, a fuel cell case 300 and an intermediate layer 121. The fuel cell apparatus 100 is mounted on, for example, an electric vehicle to supply electric power to a driving source such as a motor.

As shown in Fig. 2, the fuel cell 200 has a stacked structure of a plurality of fuel cell units (also referred to as "unit cells") 7 which are polymer electrolyte fuel cells. The fuel cell 200 is also called a cell stack and has an approximate cubic appearance shape. The fuel cell 200 receives supplies of a fuel gas and an oxidizing gas. Each of the fuel cell units 7 generates electricity using the fuel gas and the oxidizing gas. For example, hydrogen gas is employed as the fuel gas, and the air is employed as the oxidizing gas.

The fuel cell unit 7 includes a membrane electrode assembly 4 and two separators 5 and 6. The membrane electrode assembly 4 is comprised of an electrolyte membrane 1 and two electrodes 2 and 3 placed on respective surfaces of the electrolyte membrane 1. The electrolyte membrane 1 is a solid polymer membrane having good proton conductivity in the wet state. The two separators 5 and 6 are arranged to hold the membrane electrode assembly 4 placed therebetween and form flow paths for reactive gases (fuel gas and oxidizing gas) and a cooling medium, and respectively serve as power collectors. Manifolds (not shown) are formed in each of the fuel cell units 7 to form the flow paths for the reactive gases and the cooling medium. A seal member (not shown) is placed between the membrane electrode assembly 4 and the separator 5 and between the membrane electrode assembly 4 and the separator 6 to surround the manifolds. A seal member (not shown) is also placed between two adjacent fuel cell units 7 to surround manifolds (not shown). These seal members are used to suppress leakage of the reactive gases and the cooling medium from the fuel cell 200.

The fuel cell case 300 includes an upper cover 113, an end face cover 111 and a bottom cover 114. As shown in Figs. 1 and 2, the upper cover 113 is arranged to cover the top face of the fuel cell 200, the respective side faces of the fuel cell 200 and one end face of the fuel cell 200. The one end face denotes one of two faces located at both ends in the stacking direction of the fuel cell 200.

The upper cover 113 includes a particle supplier structure 112. The particle supplier structure 112 is protruded from the upper surface of the upper cover 113 and includes a tubular portion 112a and a cover portion 112b. The tubular portion 112a has a hollow chimney-like configuration. A through hole is formed in the thickness direction of the upper cover 113 at a joint with the tubular portion 112a. The inside of the tubular portion 112a communicates with a space between the upper cover 113 and the upper surface of the fuel cell 200. The tubular portion 112a corresponds to the container portion of the claims. The use of the particle supplier structure 112 will be described later. As shown in Fig. 2, the upper cover 113 is arranged to come into contact with the one end face of the fuel cell 200 and is fixed to the one end face by, for example, bolts and nuts.

The end face cover 111 is arranged to come into contact with and cover the other end face that is not covered by the upper cover 113 out of the two end faces of the fuel cell 200. The end face cover 111 is fixed to the end face of the fuel cell 200 by, for example, bolts and nuts. As shown in Fig. 1, six through holes 10 are formed to pass through in the thickness direction of the end face cover 111. These six through holes 10 are used to form a supply path and an exhaust path of the fuel gas, a supply path and an exhaust path of the oxidizing gas and a supply path and a discharge path of the cooling medium, which are respectively arranged to pass through the end face cover 111.

The bottom cover 114 is arranged to come into contact with and cover the bottom face of the fuel cell 200. The bottom cover 114 is fixed to the upper cover 113 and the fuel cell 200 by, for example, bolts and nuts.

The intermediate layer 121 is formed between the fuel cell 200 and the fuel cell case 300. More specifically, the intermediate layer 121 is formed to fill spaces between the respective faces other than the two end faces and the bottom face of the surface of the fuel cell 200 (i.e., upper face and two side faces) and the inner surface of the fuel cell case 300.

According to the first embodiment, the intermediate layer 121 is comprised of small particles having a small mean diameter. The particles may be made of a material having insulating property, for example, sand, resin beads or glass beads. The intermediate layer 121 of this embodiment is formed to satisfy Expression (1) given below:

$$X0 \geq Fg/(K1+K2) \hspace{4cm} (1)$$

In Expression (1) given above, a variable X0 indicates an allowable amount of misalignment of the fuel cell units 7 in the fuel cell 200. The allowable amount of misalignment of the fuel cell units 7 is an amount of positional misalignment of the fuel cell units 7 in a direction perpendicular to the stacking direction and denotes an upper limit amount of misalignment that does not cause leakage of the reactive gas or the cooling medium. For example, in the case that the seal member placed between adjacent fuel cell units 7 is deviated from an expected position (position surrounding the manifolds) due to a significant amount of positional misalignment of the fuel cell units 7, the reactive gas or the cooling medium is likely to be leaked from the deviated part. The allowable amount of misalignment may be determined by experiment. More specifically, the method of the experiment increases a load applied to the fuel cell 200 while supplying the reactive gas to the fuel cell 200, specifies a maximum load that does not cause leakage of the reactive gas and specifies a maximum amount of positional misalignment between adjacent fuel cell units 7 in the direction perpendicular to the stacking direction under the maximum load. This maximum value is determined as X0.

In Expression (1) given above, a variable Fg indicates an inertial force applied to the fuel cell 200. The inertial force applied to the fuel cell 200 means, for example, an inertial force expected to be applied to the fuel cell 200 in the case that the fuel cell apparatus 100 is mounted on the vehicle.

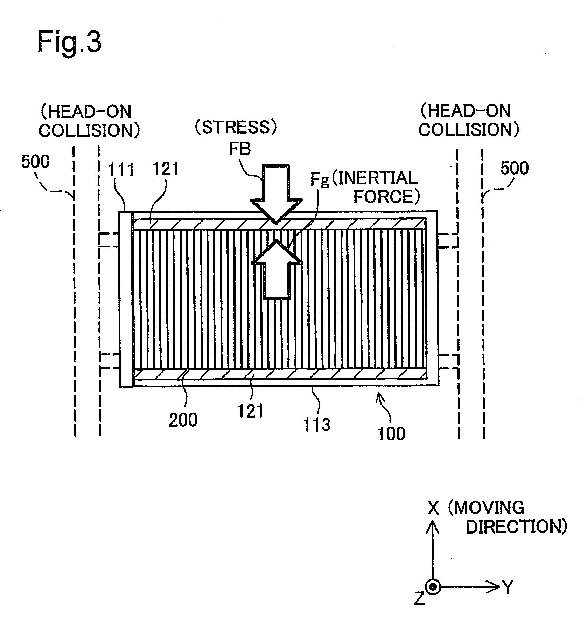

Fig. 3 is a diagram illustrating the inertial force applied to the fuel cell 200 in the case that the fuel cell apparatus 100 is mounted on the vehicle. As shown in Fig. 3, the end face cover 111 and the upper cover 113 are fixed to side members 500 of the vehicle. In this state, for example, in the event of a head-on collision, an inertial force Fg is applied in a moving direction to the fuel cell 200 that is not directly connected with the side members 500.

The inertial force Fg may be determined in advance by a test. More specifically, the method of the test mounts the fuel cell apparatus 100 on the vehicle and attaches an acceleration sensor to the fuel cell 200 or the fuel cell case 300. The method then performs a collision test with regard to this vehicle under conditions based on laws and regulation and safety evaluation conditions. The collision test employed may be a collision test specified in, for example, U.S. NCAP (the United States New Car Assessment Program), LINCAP (Lateral Impact New Car Assessment Program) or IIHS (Insurance Institute for Highway Safety). The method specifies a maximum value of acceleration during the test out of the accelerations measured by the acceleration sensor and multiplies the maximum value of acceleration by the weight of the fuel cell 200 to determine the variable Fg.

In Expression (1) given above, a variable K1 indicates a spring constant of the intermediate layer 121. The spring constant K1 of the intermediate layer 121 may be measured by a compression test of a layer of particles formed to have the same thickness as that of the intermediate layer 121. In Expression (1) given above, a variable K2 indicates a spring constant of the fuel cell case 300. Similarly this spring constant K2 may be measured by the compression test of the fuel cell case 300.

According to the first embodiment, the intermediate layer 121 is formed such as to increase the spring constant (K1+K2) of combined layers of the intermediate layer 121 and the fuel cell case 300 (hereinafter called "composite layer"). When the expected inertial force Fg is applied to the composite layer via the fuel cell 200, deformation of the composite layer is smaller than the allowable amount of misalignment X0. Accordingly, even when deformation of the composite layer causes positional misalignment of the respective fuel cell units 7 constituting the fuel cell 200, this configuration causes the positional misalignment to be smaller than the allowable amount of misalignment X0. This suppresses leakage of the reactive gas or the cooling medium associated with the positional misalignment of the fuel cell units 7. In other words, the intermediate layer 121 is formed to provide the composite layer of high rigidity. In the case that the inertial force Fg as shown in Fig. 3 is transmitted from the fuel cell 200 to the composite layer (intermediate layer 121 and fuel cell case 300), the composite layer applies a stress FB to the fuel cell 200 while suppressing its own deformation. This accordingly suppresses the positional misalignment of the respective fuel cell units 7 in the fuel cell 200.

The intermediate layer 121 of the first embodiment is formed to satisfy Expressions (2) and (3) given below, in addition to Expression (1) given above:

$$K1 = \alpha * E * (1/D) \qquad\qquad (2)$$

$$D > D0 \qquad\qquad\qquad\qquad (3)$$

In Expression (2) given above, a constant $\alpha$ is a constant of proportionality. In Expression (2) given above, a variable E indicates a Young's modulus of the intermediate layer 121. The Young's modulus E of the intermediate layer 121 may be determined by a bending test. In Expression (2) given above, a variable D indicates a thickness (average value) of the intermediate layer 121. The thickness D of the intermediate layer 121 may be determined, for example, by measuring the thickness of the intermediate layer 121 at respective positions corresponding to the respective fuel cell units 7 using a caliper square or the like and calculating the average value from the measurement values. A variable D0 indicates a length for specifying the minimum required size of the fuel cell case 300 to contain the fuel cell 200 in the fuel cell case 300. More specifically, the variable D0 is 1/2 of the minimum required difference between the length of the fuel cell units 7 and the length of the fuel cell case 300 in the direction perpendicular to the stacking direction to contain the fuel cell 200 in the fuel cell case 300.

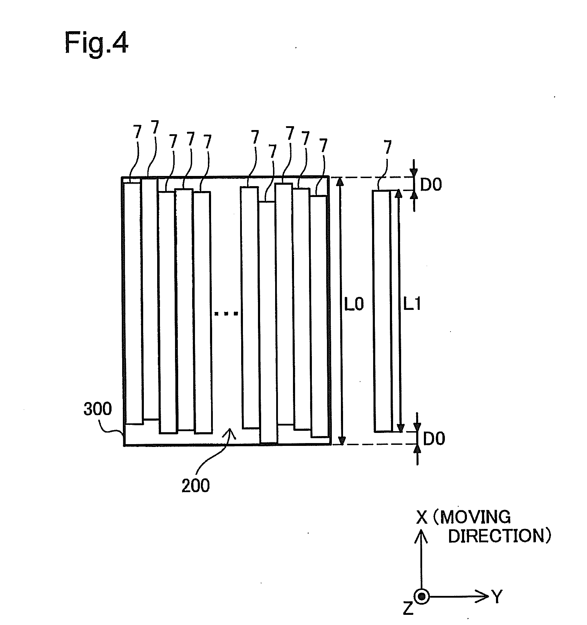

Fig. 4 is a diagram schematically illustrating a method of determining the variable D0. As shown in Fig. 4, the positions of the respective fuel cell units 7 constituting the fuel cell 200 are slightly shifted from one another in an X-axis direction. Such positional misalignment of the respective fuel cell units 7 may be attributed to, for example, an assembling error during manufacture of the fuel cell 200. The fuel cell 200 includes the positional misalignment of the respective fuel cell units 7, so that a length L0 of the fuel cell 200 in the X-axis direction is greater than a length L1 of the fuel cell units 7 in the X-axis direction. In other words, there is a difference 2*D0 between the length L0 of the fuel cell 200 and the length L1 of the fuel cell units 7 along the X-axis direction. The length in the X-axis direction of the inner surface of the fuel cell case 300 that is greater than the length L1 in the X-axis direction of the fuel cell units 7 by 2*D0 allows the fuel cell 200 to be contained in the fuel cell case 300. Accordingly, as shown by Expression (3) given above, the thickness (average value) of the intermediate layer 121 placed between the respective fuel cell units 7 and the inner surface of the fuel cell case 300 is required to satisfy the condition that the thickness is greater than the length D0. Although not being specifically illustrated, the respective fuel cell units 7 also have positional misalignment in a Z-axis direction, like the positional misalignment in the X-axis direction described above. The length in the Z-axis direction of the inner surface of the fuel cell case 300 that is greater than the length in the Z-axis direction of the fuel cell units 7 by 2*D0 allows the fuel cell 200 to be contained in the fuel cell case 300.

The constant of proportionality $\alpha$, described above may be calculated by determining the spring constant K1, the Young's modulus E of the intermediate layer 121 and the average thickness D of the intermediate layer 121 and substituting these values in Expression (2) given above.

As shown by Expression (2) given above, according to the first embodiment, the Young's modulus E of the intermediate layer 121 is proportional to the thickness D of the intermediate layer 121. At the fixed spring constant K1, the thickness D of the intermediate layer 121 may be increased by increasing the Young's modulus E. This satisfies Expression (3). The configuration of the first embodiment allows for an increase in Young's modulus E of the intermediate layer 121 as described above, thus enhancing the rigidity of the intermediate layer 121 and suppressing distortion. Additionally, this configuration allows for an increase in thickness D of the intermediate layer 121, thus increasing the distance between the fuel cell 200 and the fuel cell case 300. This enables the fuel cell 200 to be reliably contained in the fuel cell case 300 even in the case of a relatively large assembling error (tolerance) of the fuel cell units 7 during production of the fuel cell 200.

As described above, in the fuel cell apparatus 100 of the first embodiment, the intermediate layer 121 is formed such as to increase the spring constant of the composite layer and more specifically to increase the Young's modulus of the intermediate layer 121. According to the first embodiment, this intermediate layer 121 is provided by manufacturing the fuel cell apparatus according to a method described below using the particles made of a base material having a relatively high Young's modulus (such as sand or glass).

A2. Manufacturing Method of Fuel Cell

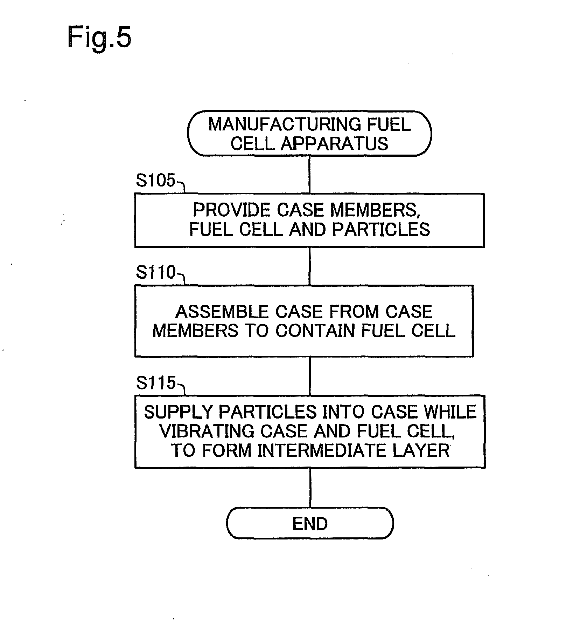

Fig. 5 is a flowchart showing a procedure of manufacturing method of the fuel cell apparatus 100 according to the first embodiment. The procedure first provides members for the fuel cell case 300, the fuel cell 200 and the particles (step S105). The members for the fuel cell case 300 include the end face cover 111, the upper cover 113 and the bottom cover 114. The diameter of the particles in the first embodiment is equal to or less than 1/2 of the variable D0 described above. The procedure subsequently assembles the fuel cell case 300 to contain the fuel cell 200 (step S110).

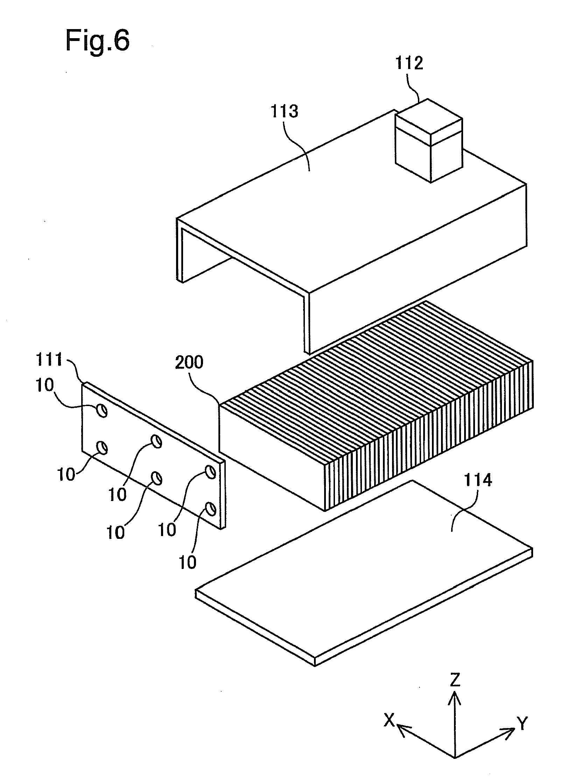

Fig. 6 is a diagram schematically illustrating the process of step S110. As shown in Fig. 6, the end face cover 111, the upper cover 113 and the bottom cover 114 are arranged such as to cover the respective faces of the fuel cell 200. These covers are then assembled to complete the fuel cell case 300, while being connected with the fuel cell 200 by, for example, bolts and nuts. At step S110, the intermediate layer 121 shown in Fig. 2 is not yet formed, so that a space is left at the place where the intermediate layer 121 is to be formed.

As shown in Fig. 5, on completion of the process of step S110, the procedure supplies the particles into the fuel cell case 300 while vibrating the fuel cell case 300 and the fuel cell 200, to form the intermediate layer 121 (step S115). The vibration of the fuel cell case 300 and the fuel cell 200 may be produced by, for example, vibrating the fuel cell case 300 containing the fuel cell 200 with a vibration generator. A concrete procedure of supplying the particles into the fuel cell case 300 may open the cover portion 112b of the particle supplier structure 112 and supply the particles into the tubular portion 112a. The particle supplier structure 112 is located at the uppermost position of the fuel cell case 300 in the vertical direction in the state that the fuel cell case 300 is mounted. Accordingly, the particles supplied from the particle supplier structure 112 are fed into the space between the surface of the fuel cell 200 and the inner surface of the fuel cell case 300 by their own weight. Additionally, the vibration of the fuel cell case 300 and the fuel cell 200 causes the particles supplied into the fuel cell case 300 to be densely packed in the space between the surface of the fuel cell 200 and the inner surface of the fuel cell case 300. The diameter of the particles is equal to or less than 1/2 of the variable DO and is relatively small. This suppresses the particles from being caught by the concavities and convexities of the space between the surface of the fuel cell 200 and the inner surface of the fuel cell case 300 and relatively reduces the gap between the particles. This enables the particles to be densely packed in the space between the surface of the fuel cell 200 and the inner surface of the fuel cell case 300. Such dense packing of the particles increases the Young's modulus of the intermediate layer 121.

After forming the intermediate layer 121 in the fuel cell case 300, the process of step S115 continues supplying the particles until the inside of the tubular portion 112a is filled with the particles as shown in Fig. 2. When a gap is produced inside of the fuel cell case 300 during the use of the fuel cell apparatus 100, the configuration of filling the inside of the tubular portion 112a in advance with the particles enables the particles to be automatically supplied into the gap. The gap may be produced inside of the fuel cell case 300 during the use of the fuel cell apparatus 100, for example, when the packing density of the particles inside of the fuel cell case 300 increases associated with vibration of the vehicle on which the fuel cell apparatus 100 is mounted.

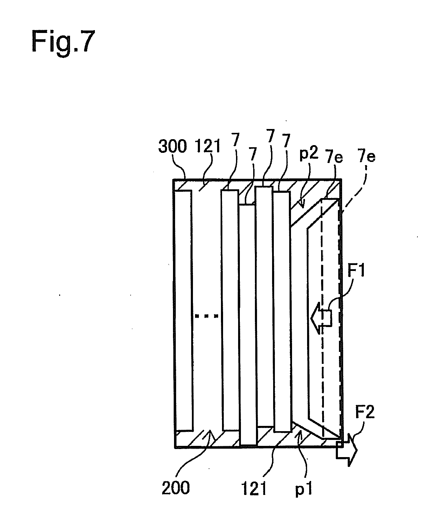

Excessively dense packing of the particles is, however, likely to cause leakage of the reactive gas or the cooling medium when a force that is likely to provide a dimensional change along the stacking direction is applied to the fuel cell 200 by aged deterioration. The first embodiment accordingly regulates the packing density of the particles to such a degree that suppresses the leakage. The following describes the force that is likely to provide a dimensional change along the stacking direction with reference to Fig. 7.

Fig. 7 is a diagram schematically illustrating the fuel cell case 300 and the fuel cell 200 after aged deterioration. When a long time has elapsed since the start of using the fuel cell apparatus 100, thermal deformation of the entire fuel cell units 7, swelling or contraction of the electrolyte membrane 1 included in each fuel cell unit 7 or the like may cause a force that is likely to provide a dimensional change along the stacking direction of the fuel cell 200. For example, as shown in Fig. 7, a stress F1 directing toward the center of the fuel cell 200 may be generated as the force that is likely to provide a dimensional change, in a fuel cell unit 7e located at an end. The fuel cell unit 7e located at the end of the fuel cell 200 has one side that is not in contact with any other fuel cell unit 7. Compared with the other fuel cell units 7, the fuel cell unit 7e has a relatively large force of constraint F2 by the intermediate layer 121 against the force that is likely to provide a dimensional change. Accordingly, only a central area of the fuel cell unit 7e moves toward the center of the fuel cell 200, while an edge of the fuel cell unit 7e close to the intermediate layer 121 is restrained at its original position. As a result, as shown in Fig. 7, the edge of the fuel cell unit 7e is bent to break sealing by the seal member provided in the vicinity of this edge. This may cause leakage of the reactive gas or the cooling medium. According to the first embodiment, the intermediate layer 121 is formed such that the force of constraint F2 becomes smaller than an allowable load (allowable stress) that does not cause breakage of sealing in the fuel cell unit 7e at the end.

The allowable load may be determined by, for example, performing a bending test that applies a load along the stacking direction while supplying a test gas to the fuel cell 200 to specify a maximum load that does not cause leakage of gas. The force of constraint of the intermediate layer 121 may be determined by inserting the fuel cell unit 7 into the intermediate layer 121 and applying a load to the fuel cell unit 7 to specify a load that moves the fuel cell unit 7 by a predetermined distance in a specified time period. The force of constraint F2 may be regulated by adjusting the packing density of the particles. More specifically, an increase in packing density of the particles increases the force of constraint F2, while a decrease in packing density of the particles decreases the force of constraint F2. The packing density of the particles may be adjusted by controlling the mean diameter of the particles. More specifically, a decrease in mean diameter of the particles increases the packing density, while an increase in mean diameter of the particles decreases the packing density. As described above, the first embodiment controls the mean diameter of the particles to regulate the force of constraint F2 of the intermediate layer 121 to be equal to or less than the allowable load, thus suppressing leakage of the reactive gas or the cooling medium from the fuel cell 200.

In the fuel cell apparatus 100 of the first embodiment described above, the intermediate layer 121 is formed between the fuel cell 200 and the fuel cell case 300. The intermediate layer 121 and the fuel cell case 300 are configured to satisfy Expression (1) given above. Even when the expected inertial force Fg is applied to the fuel cell 200 and is transmitted to the intermediate layer 121 and the fuel cell case 300, the amount of deformation of the intermediate layer 121 and the fuel cell case 300 is smaller than the variable X0. Accordingly, even when deformation of the intermediate layer 121 and the fuel cell case 300 causes a positional misalignment of the respective fuel cell units 7 constituting the fuel cell 200, the positional misalignment is smaller than the allowable amount of misalignment X0. This suppresses leakage of the reactive gas or the cooling medium from the fuel cell 200.

The intermediate layer 121 is configured to satisfy Expressions (2) and (3) given above, so that the rigidity of the intermediate layer 121 can be enhanced by increasing the Young's modulus of the intermediate layer 121. This enables the rigidity of the fuel cell case 300 to be lowered by decreasing the spring constant K2 of the fuel cell case 300, while the spring constant (K1+K2) of the composite layer (the intermediate layer 121 and the layer of the fuel cell case 300) is kept unchanged. This enables a relatively lightweight material (for example, resin) to be used as the base material of the fuel cell case 300.

The intermediate layer 121 is comprised of the particles. After the fuel cell 200 is contained in the fuel cell case 300, the particles are supplied into the fuel cell case 300 to form the intermediate layer 121. Additionally, the material having the diameter that is equal to or less than 1/2 of the variable D0 is used for the particles. This enables the particles to be densely packed in the space between the surface of the fuel cell 200 and the inner surface of the fuel cell case 300. This increases the Young's modulus of the intermediate layer 121 and thereby increases the spring constant K1 of the intermediate layer 121, while decreasing the spring constant K2 of the fuel cell case 300. The fuel cell case 300 may thus be made of a lightweight material of low rigidity.

The intermediate layer 121 is formed, such that the force of constraint F2 of the intermediate layer 121 becomes smaller than the allowable load that does not cause leakage of the reactive gas or the cooling medium. Even when there is a dimensional change in the stacking direction of the fuel cell 200 by aged deterioration, this configuration suppresses leakage of the reactive gas or the cooling medium from the fuel cell 200.

In the fuel cell apparatus 100, the inside of the particle supplier structure 112 (tubular portion 112a) is filled in advance with the particles. Even when a gap is produced inside of the fuel cell case 300 during the use of the fuel cell apparatus 100, the particles inside of the particle supplier structure 112 may be used to automatically fill the gap.

B. Second Embodiment

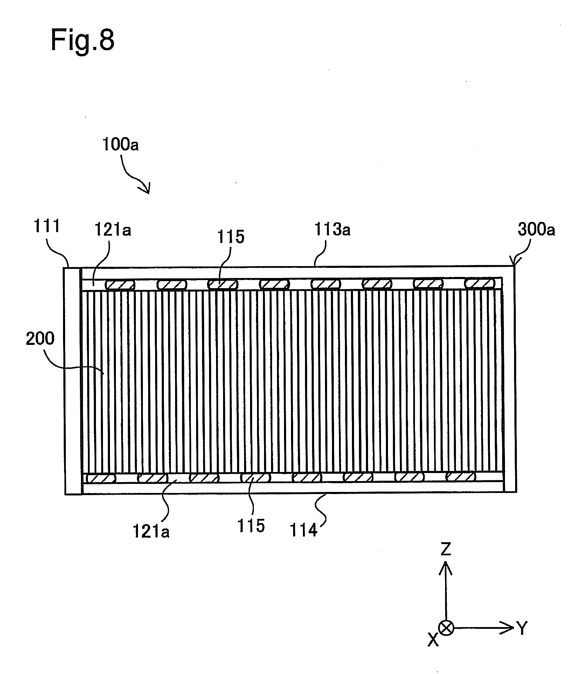

Fig. 8 is a cross sectional view illustrating a fuel cell apparatus according to a second embodiment. A fuel cell apparatus 100a shown in Fig. 2 differs from the fuel cell apparatus 100 shown in Fig. 2 by omission of the particle supplier structure 112 from an upper cover 113a of a fuel cell case 300a, replacement of the intermediate layer 121 by an intermediate layer 121a, additional formation of the intermediate layer 121a between the fuel cell 200 and the bottom cover 114 and the procedure of manufacturing the fuel cell apparatus. The other configuration of the second embodiment is similar to that of the fuel cell apparatus 100 of the first embodiment.

The intermediate layer 121a of the second embodiment is comprised of a large number of bag bodies 115. The bag body 115 is formed by filling a flexible bag member with particles. The flexible bag member employed may be, for example, a resin bag such as polyethylene or a rubber bag. The bag member may have any appearance shape, for example, a spherical shape or a cylindrical shape. The particles of the second embodiment are identical with the particles used as the base material of the intermediate layer 121 in the first embodiment. The bag bodies 115 are arranged at intervals in Fig. 8, but the bag bodies 115 may be packed without such intervals.

This fuel cell apparatus 100a may be manufactured by, for example, a procedure described below. The procedure first provides a large number of bag bodies 115, case members for the fuel cell case 300 and the fuel cell 200. The procedure subsequently places the bag bodies 115 on the bottom cover 114 and places the fuel cell 200 on the bag bodies 115. The procedure then places the bag bodies 115 on the upper surface of the fuel cell 200 and assembles the upper cover 113a and the end face cover 111 with the fuel cell 200. Another manufacturing procedure described below may alternatively be employed. The procedure first provides a large number of bag bodies 115, case members for the fuel cell case 300 and the fuel cell 200. The procedure subsequently places the bag bodies 115 on the bottom cover 114 and mounts the bag bodies 115 on part of the inner surface of the upper cover 113a that is to be arranged to cover the upper surface of the fuel cell 200. The procedure then assembles the upper cover 113a, the end face cover 111 and the bottom cover 114 with the fuel cell 200 and also with one another to cover the fuel cell 200.

The fuel cell apparatus 100a of the second embodiment having the above configuration has similar advantageous effects to those of the fuel cell apparatus 100 of the first embodiment. Additionally, in the 100a of the second embodiment, the intermediate layer 121a is comprised of the bag bodies 115. This suppresses scattering of the particles during manufacture of the fuel cell apparatus 100a and facilitates handling of the particles. The intermediate layer 121a is additionally formed between the bottom face of the fuel cell 200 and the bottom cover 114. Even when an inertial force is applied downward in the vertical direction to the fuel cell 200, this suppresses positional misalignment of the fuel cell units 7 constituting the fuel cell 200.

C. Modifications

C1. Modification 1

Each of the embodiments uses the particles as the base material of forming the intermediate layer 121 or 121a. A material other than the particles may be used as the base material. More specifically, for example, a plate-like resin material such as urethane compressed and hardened in the thickness direction may be used as the base material of forming the intermediate layer 121 or 121a. In another example, a rod-like material made of, for example, glass may be used as the base material of forming the intermediate layer 121 or 121a. These configurations have similar advantageous effects to those of the respective embodiments described above.

C2. Modification 2

In each of the embodiments, the fuel cell case 300 or 300a is comprised of the three members, i.e., the end face cover 111, the upper cover 113 or 113a and the bottom cover 114. The invention is, however, not limited to this configuration. For example, the fuel cell case 300 or 300a may be comprised of six plate-like members that form the respective faces to cover the fuel cell 200. In another example, the fuel cell case 300 or 300a may be comprised of two members, i.e., a container-like member having five faces other than the top face joined together in advance and a cover member forming the top face. These configurations have similar advantageous effects to those of the respective embodiments described above.

C3. Modification 3

In each of the embodiments, the intermediate layer 121 or 121a is configured to satisfy Expressions (2) and (3) given above. The configuration employed may alternatively not satisfy Expressions (2) and (3) given above. In the latter configuration, the intermediate layer 121 or 121a has a low Young's modulus and a small spring constant. The composite layer, however, has a large spring constant (K1+K2) and satisfies Expression (1) given above. Even when the inertial force Fg is applied to the fuel cell 200, this configuration accordingly suppresses leakage of the reactive gas or the cooling medium from the fuel cell 200. The intermediate layer 121 or 121a may be formed to have the force of constraint F2 that is equal to or higher than the allowable load. This configuration may not suppress leakage of the reactive gas or the cooling medium associated with a dimensional change in the stacking direction. This configuration, however, suppresses leakage of the reactive gas or the cooling medium when the inertial force Fg is applied to the fuel cell 200.

C4. Modification 4

In the first embodiment, the respective faces of the fuel cell 200 other than the two end faces and the bottom face of the fuel cell 200 are covered by the intermediate layer 121 and the fuel cell case 300. In the second embodiment, the respective faces of the fuel cell 200 other than the two end faces of the fuel cell 200 are covered by the intermediate layer 121a and the fuel cell case 300. The invention is, however, not limited to these configurations. For example, at least one side face along the stacking direction out of the respective faces of the fuel cell 200 may be covered by the intermediate layer 121 or 12a and the fuel cell case 300. The "at least one side face along the stacking direction" denotes at least one face out of the four faces other than two end faces of the sixth faces of the fuel cell 200 (i.e., top face, two other end faces and bottom face). The configuration that the at least one side face along the stacking direction is entirely covered by the intermediate layer 121 or 12a and the fuel cell case 300 may be replaced by a configuration that at least part of the at least one side face along the stacking direction is covered by the intermediate layer 121 or 121a. In general, the employable configuration of the invention may have an outer cover that is provided to cover at least part of the side face along the stacking direction of the fuel cell 200 and an intermediate layer placed between the outer cover and the side face covered by the outer cover.

C5. Modification 5

The fuel cell apparatus 100 or 100a is mounted on the electric vehicle in each of the embodiments but may be mounted on any of various other moving bodies such as a hybrid vehicle, a ship or a robot, instead of the electric vehicle. The fuel cell apparatus 100 or 100a may also be used as a stationary power supply.

The invention is not limited to any of the embodiments, the examples and the modifications described above but may be implemented by a diversity of other configurations without departing from the scope of the invention. For example, the technical features of the embodiments, examples and modifications corresponding to the technical features of the respective aspects described in Summary may be replaced or combined appropriately, in order to solve part or all of the problems described above or in order to achieve part or all of the advantageous effects described above. Any of the technical features may be omitted appropriately unless the technical feature is described as essential herein.

Reference Signs List

    1 electrolyte membrane
    2, 3 electrode
    4 membrane electrode assembly
    5,6 separator
    7, 7e fuel cell unit
    10 through hole
    100, 100a fuel cell apparatus
    111 end face cover
    112 particle supplier structure
    112a tubular portion
    112b cover portion
    113, 113a upper cover
    114 bottom cover
    115 bag body
    121, 12a intermediate layer
    200 fuel cell
    300, 300a fuel cell case
    500 side member
    F1 stress
    F2 force of constraint
    FB stress
    Fg inertial force

**Claims**

1.    A fuel cell apparatus, comprising:

        a fuel cell that has a stacked structure of a plurality of fuel cell units;
        an outer cover that is provided to cover at least part of a side face of the fuel cell along a stacking direction of the fuel cell; and
        an intermediate layer that is placed between the outer cover and the side face covered by the outer cover, wherein the outer cover and the intermediate layer are configured to satisfy $X0 > Fg/(K1+K2)$, where K1 represents a spring constant of the intermediate layer, K2 represents a spring constant of the outer cover, Fg represents an inertial force applied to the fuel cell and X0 represents an allowable amount of misalignment of the fuel cell unit in the fuel cell.

2.    The fuel cell apparatus according to claim 1, wherein
    the intermediate layer is configured to satisfy $Kl = \alpha*E*(1/D)$ and $D>D0$, where E represents a Young's modulus of the intermediate layer, D represents a thickness of the intermediate layer, D0 represents a minimum required clearance between the outer cover and the side face covered by the outer cover, and $\alpha$ represents a constant of proportionality.

3.    The fuel cell apparatus according to either claim 1 or claim 2, wherein
    the intermediate layer is comprised of a plurality of particles.

4.    The fuel cell apparatus according to claim 3, wherein

a force of constraint by the intermediate layer with regard to a fuel cell unit located at an end out of the plurality of fuel cell units is smaller than an allowable load along the stacking direction with regard to the fuel cell unit.

5. The fuel cell apparatus according to either claim 3 or claim 4, wherein
the particles have a spherical appearance shape, and
the particles have a mean diameter that is equal to or less than 1/2 of a minimum required clearance between the outer cover and the side face covered by the outer cover.

6. The fuel cell apparatus according to any one of claims 3 to 5, wherein
the outer cover is configured to cover all side faces of the fuel cell along the stacking direction of the fuel cell and includes a supplier structure that is configured to supply the particles and is placed on a surface of the outer cover which covers a top face of the fuel cell in a vertical direction in a state that the fuel cell is mounted, and
the supplier structure includes a container portion and the particles contained in the container portion and supplies the particles between the outer cover and the fuel cell by utilizing weight of the particles.

7. The fuel cell apparatus according to either claim 1 or claim 2, wherein
the intermediate layer is comprised of flexible bag bodies, in each of which a number of particles are sealed.

8. The fuel cell apparatus according to any one of claims 3 to 7, wherein
the particles include at least one of sand, resin beads and glass beads.

9. The fuel cell apparatus according to any one of claims 1 to 8, wherein
the fuel cell receives supplies of a reactive gas and a cooling medium, and
the allowable amount of misalignment is an amount of positional misalignment of the fuel cell unit in a direction perpendicular to the stacking direction and is an upper limit amount of misalignment that does not cause leakage of the reactive gas or the cooling medium in the fuel cell.

10. A manufacturing method of a fuel cell apparatus, comprising the steps of:

   (a) providing a fuel cell that has a stacked structure of a plurality of fuel cell units;
   (b) providing an outer cover to cover all side faces of the fuel cell along a stacking direction of the fuel cell; and
   (c) supplying particles between the outer cover and the fuel cell while vibrating the outer cover and the fuel cell, so as to form an intermediate layer comprised of the particles between the outer cover and the side face, wherein

   the step (c) comprises

   (c1) forming a layer that satisfies $X0 > Fg/(K1+K2)$ as the intermediate layer, where K1 represents a spring constant of the intermediate layer, K2 represents a spring constant of the outer cover, Fg represents an inertial force applied to the fuel cell and X0 represents an allowable amount of misalignment of the fuel cell unit in the fuel cell.

Fig.1

# Fig.2

Fig.3

# Fig.4

X (MOVING DIRECTION)

# Fig.5

MANUFACTURING FUEL
CELL APPARATUS

S105
PROVIDE CASE MEMBERS,
FUEL CELL AND PARTICLES

S110
ASSEMBLE CASE FROM CASE
MEMBERS TO CONTAIN FUEL CELL

S115
SUPPLY PARTICLES INTO CASE WHILE
VIBRATING CASE AND FUEL CELL,
TO FORM INTERMEDIATE LAYER

END

Fig.6

# Fig.7

## Fig.8

<table>
<tr><td colspan="2">**INTERNATIONAL SEARCH REPORT**</td><td>International application No.<br>PCT/JP2014/000492</td></tr>
</table>

| | |
|---|---|
| A. CLASSIFICATION OF SUBJECT MATTER<br>*H01M8/24*(2006.01)i, *H01M8/10*(2006.01)n<br><br>According to International Patent Classification (IPC) or to both national classification and IPC | |

**B. FIELDS SEARCHED**

Minimum documentation searched (classification system followed by classification symbols)
H01M8/24, H01M8/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-56076 A (Toshiba Corp.),<br>24 February 1992 (24.02.1992),<br>entire text; all drawings<br>(Family: none) | 1-2,9 |
| X | JP 2005-71869 A (Honda Motor Co., Ltd.),<br>17 March 2005 (17.03.2005),<br>entire text; all drawings<br>(Family: none) | 1-2,9 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 March, 2014 (25.03.14) | Date of mailing of the international search report<br>08 April, 2014 (08.04.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/000492 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>A | Microfilm of the specification and drawings annexed to the request of Japanese Utility Model Application No. 113480/1989(Laid-open No. 52956/1991)<br>(Toshiba Corp.),<br>22 May 1991 (22.05.1991),<br>entire text; all drawings<br>(Family: none) | 1-6,8-10<br>7 |
| X | JP 2005-285405 A  (Honda Motor Co., Ltd.),<br>13 October 2005 (13.10.2005),<br>entire text; all drawings<br>& US 2005/0214619 A1 | 1-2,9 |
| A | CD-ROM of the specification and drawings annexed to the request of Japanese Utility Model Application No. 11164/1993(Laid-open No. 70164/1994)<br>(Mitsubishi Heavy Industries, Ltd.),<br>30 September 1994 (30.09.1994),<br>entire text; all drawings<br>(Family: none) | 1 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P201335296 B

- JP 2003203670 A